# FASCICULE DE BREVET EUROPEEN

(11) **EP 0 751 885 B1**
(45) Date de publication et mention de la délivrance du brevet: **21.10.1998**
(21) Numéro de dépôt: 96901404.2
(22) Date de dépôt: 17.01.1996
(51) Int. Cl.: B60S 1/38, B60S 1/52

(54) **ESSUIE-GLACE POUR VEHICULE AUTOMOBILE DU TYPE COMPORTANT UNE RAMPE D'ARROSAGE PORTEE PAR LE BALAI D'ESSUIE-GLACE**
KRAFTFAHRZEUG-SCHEIBENWISCHER MIT EINER AUF DEM WISCHBLATT GETRAGENEN SPRÜHVORRICHTUNG
MOTOR VEHICLE WINDSCREEN WIPER COMPRISING A SPRAY LINE ON THE WIPER BLADE

(30) Priorité: 19.01.1995 FR 9500804
(43) Date de publication de la demande: 08.01.1997
(73) Titulaire: VALEO SYSTEMES D'ESSUYAGE, 78321 La Verrière (FR)
(72) Inventeur: EUSTACHE, Jean-Pierre, F-92160 Antony (FR); ROUMEGOUX, Jean-Louis, F-75116 Paris (FR)
(74) Mandataire: Gamonal, Didier
(86) Numéro de dépôt international: FR9600074
(87) Numéro de publication internationale: WO9622206

(56) Documents cités:
- FR-A- 2 648 771
- FR-A- 2 676 694
- GB-A- 2 211 458
- US-A- 3 296 647

## Description

La présente invention concerne un essuie-glace de véhicule automobile.

L'invention concerne plus particulièrement un essuie-glace du type comportant un bras porte-balais et un balai d'essuie-glace gui comporte une structure articulée de répartition de pression de la raclette d'essuyage comportant au moins un étrier articulé autour d'un axe d'articulation perpendiculaire à la direction générale du balai, et du type comportant une rampe d'arrosage de la vitre à essuyer gui s'étend au moins en partie le long d'une face latérale du balai d'essuie-glace.

L'agencement d'une rampe d'arrosage le long du balai d'essuie-glace permet d'assurer un arrosage efficace par une bonne répartition des points d'arrosage en produit de lavage de la vitre à essuyer .

A cet effet, la rampe d'arrosage doit être agencée la plus près possible de la zone d'essuyage, c'est-à-dire à proximité de la raclette d'essuyage portée par la structure articulée de répartition de pression gui porte la raclette d'essuyage.

Selon différentes conceptions connues, il a déjà été proposé de réaliser la rampe d'arrosage sous forme d'un composant indépendant gui se présente généralement sous la forme d'un corps rigide allongé gui est juxtaposé contre une face latérale de l'étrier principal de la structure articulée auquel elle est fixée par des cavaliers d'accrochage, par emboîtement élastique ou par des fixations par vis, rivets, colliers, etc.

Toutes ces conceptions ont pour inconvénient de nuire au profilage aérodynamique du balai d'essuie-glace ainsi qu'à son esthétique générale.

Il a également déjà proposé d'intégrer la rampe d'arrosage au balai d'essuie-glace, ou à l'un des composants du balai, lorsque ceux-ci sont réalisés par moulage en matière plastique.

Une telle solution n'est toutefois pas transposable dans tous les cas, et notamment lorsque la structure de support articulée est réalisée par assemblage et articulation de composants essentiellement métalliques.

La présente invention a pour but de proposer une nouvelle conception d'un essuie-glace du type mentionné précédemment, et notamment des moyens de fixation de la rampe d'arrosage qui simplifie le montage et la fixation de la rampe et qui permet de plus de réaliser un corps de rampe d'arrosage profilé et présentant une bonne esthétique, indépendamment des moyens de fixation.

Dans ce but, l'invention propose un essuie-glace pour véhicule automobile du type comportant un bras porte-balais, un balai d'essuie-glace et une rampe d'arrosage de la vitre à essuyer qui s'étend sensiblement le long d'une face latérale du balai d'essuie-glace, et du type dans lequel le balai d'essuie-glace comporte une structure articulée de répartition de pression comportant au moins un étrier intermédiaire monté articulé sur un étrier principal autour d'un axe d'articulation sensiblement perpendiculaire à la direction longitudinale de l'étrier principal et qui traverse deux ailes latérales parallèles de l'étrier principal et deux joues latérales parallèles de l'étrier intermédiaire, et un élément antibruit comportant deux flasques parallèles latéraux, interposés entre les ailes latérales de l'étrier principal et les joues latérales de l'étrier intermédiaire, qui sont traversés par le corps de l'axe d'articulation, caractérisé en ce que la rampe d'arrosage s'étend le long d'une des ailes latérales de l'étrier principal, et en ce que la rampe est réalisée venue de matière par moulage avec l'élément antibruit.

Selon des modes de réalisation de l'invention :
- la rampe d'arrosage comporte un corps longitudinal d'arrosage traversé longitudinalement par un canal de distribution du liquide de lavage comportant une série d'orifices d'aspersion de la vitre à essuyer, et en ce que le corps longitudinal d'arrosage est relié au bord inférieur de l'un des flasques latéraux de l'élément antibruit ;
- chacune des deux extrémités longitudinales opposées de l'étrier principal reçoit, de manière articulée et avec interposition d'un élément antibruit, un étrier intermédiaire, et le corps d'arrosage est réalisé venu de matière par moulage avec les deux éléments antibruit ;
- le corps d'arrosage est réalisé venu de matière avec une plaque verticale de rigidification qui intègre deux flasques latéraux appartenant aux deux éléments antibruit ;
- la rampe d'arrosage comporte un corps longitudinal de montage, réalisé venu de matière par moulage avec le corps longitudinal d'arrosage, qui présente une section transversale en forme de U renversé complémentaire de celle de l'étrier principal à l'intérieur duquel il est logé, et qui intègre les deux éléments antibruit ;
- le corps de montage comporte deux plaques latérales parallèles de rigidification et un dos supérieur de liaison ;
- l'étrier principal comporte un dos supérieur qui relie les ailes latérales et qui comporte une découpe pour le passage d'un connecteur d'articulation de l'extrémité du bras d'essuie-glace sur une tige d'articulation qui s'étend transversalement entre las ailes latérales, en regard de la découpe, le dos de liaison du corps de montage de la rampe d'arrosage comporte une découpe complémentaire de celle du dos de l'étrier, et les bords supérieurs des plaques latérales de rigidification, dans la zone de la découpe, comportent des échancrures alignées dans lesquelles la tige d'articulation est emboîtée élastiquement pour compléter la fixation de la rampe d'arrosage sur l'étrier principal, dans la zone centrale d'articulation de ce dernier ;
- le corps d'arrosage s'étend le long du bord inférieur de l'aile latérale associée de l'étrier principal et il présente une forme qui épouse sensiblement celle de cette aile latérale ;
- la face externe du corps d'arrosage est profilée pour constituer un déflecteur aérodynamique ;
- le corps d'arrosage comporte, à l'une de ses extrémités longitudinales, un raccord pour le raccordement du canal de distribution d'une canalisation d'alimentation en liquide de lavage sous pression.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessus d'un balai d'essuie-glace à structure articulée de support d'une raclette d'essuyage qui est équipé d'une rampe d' arrosage réalisée conformément aux enseignements de l'invention ;
- la figure 2 est une vue en perspective de la rampe d'arrosage qui équipe le balai de la figure 1 ; et
- la figure 3 est une vue en section selon la ligne 3-3 sur laquelle l'ensemble des composants est représenté à plus grande échelle.

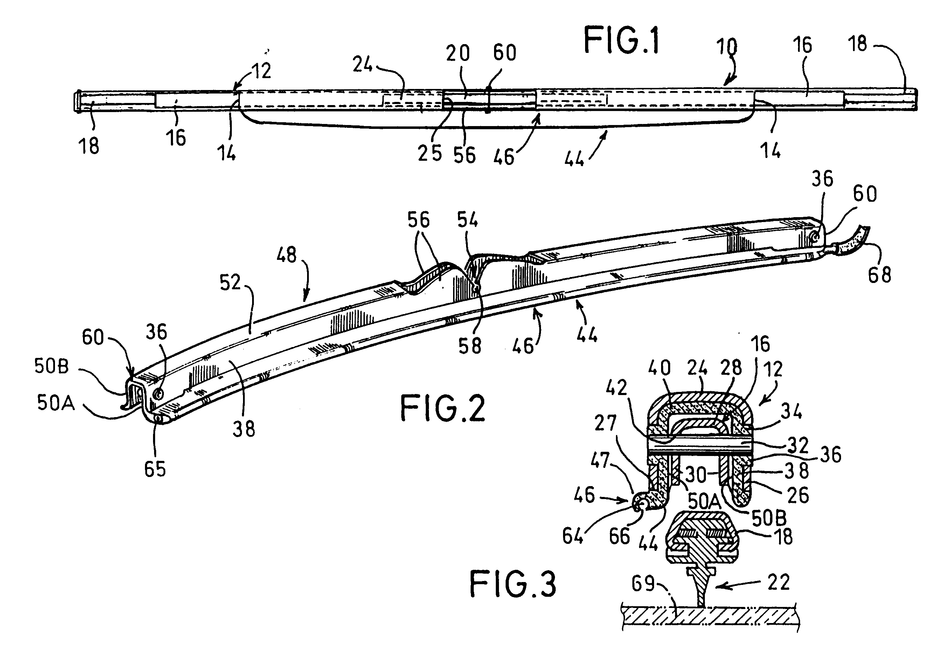

Selon une conception connue, le balai d'essuie-glace 10 illustré sur la figure 1 comporte un étrier principal 12 aux extrémités longitudinales opposées 14 duquel sont articulés deux étriers intermédiaires 16 dont chacun porte, de manière articulée, des palonniers 18 qui supportent le talon 20 d'une raclette d'essuyage 22.

L'étrier principal 12 présente, en section transversale, une forme de U renversé et il est constitué à cet effet par un dos supérieur 24 et par deux ailes latérales parallèles 26.

De même, chaque étrier intermédiaire 16 présente une section transversale en forme de U renversé et comporte à cet effet un dos supérieur 28 qui relie deux joues latérales parallèles 30.

Dans sa partie centrale, pour l'articulation de l'extrémité libre d'un bras d'essuie-glace (non représenté), le dos supérieur 24 de l'étrier principal 12 comporte une découpe rectangulaire 25.

Selon une conception connue, un élément antibruit est interposé entre l'étrier principal 12 et les étriers intermédiaires 16 dans la zone d'articulation de ces derniers.

Chacune des articulations est assurée au moyen d'une tige formant axe d'articulation 32 qui traverse des trous 34 prévus à cet effet dans les ailes latérales 26 avec interposition de douilles 36 réalisées venues de matière avec les flasques latéraux parallèles et verticaux 38 d'un élément antibruit présentant, en section transversale, une forme de U renversé, les flasques latéraux parallèles 38 étant reliés à cet effet par un dos supérieur 40.

Chaque tige d'articulation 32 traverse également des trous alignés 42 formés dans les joues latérales 30 de l'étrier intermédiaire correspondant 16.

Conformément à l'invention, une rampe d'arrosage 44 est réalisée venue de matière par moulage en matière plastique avec les éléments antibruit.

A cet effet, et comme on peut le voir sur la figure 2, la rampe d'arrosage 44 comporte un corps principal inférieur d'arrosage 46 et un corps supérieur de montage 48.

Le corps supérieur de montage 48 est une pièce de forme allongée complémentaire de la forme interne de l'étrier principal 12.

A cet effet, le corps supérieur de montage 48 comporte deux plaques latérales parallèles de rigidification 50A, 50B qui sont reliées entre elles par un dos supérieur de liaison 52.

Dans sa partie centrale, le dos supérieur de liaison 52 comporte une découpe 54 de contour complémentaire de celui de la découpe 26 formée dans le dos supérieur 24 de l'étrier principal 12.

Les bords supérieurs libres 56 des plaques latérales de rigidification 50A, 50B délimitent la découpe 54 et comportent des échancrures 58 permettant de recevoir, par emboîtement élastique, le corps de l'axe 60 d'articulation du bras d'essuie-glace qui s'étend transversalement entre les ailes latérales 26 de l'étrier principal 12 au niveau de la découpe 25.

Au voisinage de chacune de ses deux extrémités longitudinales opposées 60, chacune des deux plaques de rigidification 50A, 50B comporte, réalisées venues de matière par moulage, les douilles 36. Les flasques latéraux 38 de l'antibruit sont ainsi constitués par des portions des plaques 50A, 50B dans lesquelles ils sont intégrés et les dos 40 sont intégrés au dos 52.

Le bord longitudinal inférieur 62 de la plaque latérale de rigidification 50A se prolonge par le corps longitudinal d'arrosage 46 qui s'étend, en position montée, le long du bord longitudinal inférieur 27 de l'aile latérale correspondante 26 de l'étrier principal 12.

Le corps longitudinal d'arrosage 46 comporte un canal longitudinal 64 de distribution du liquide de lavage à travers des orifices 66 de manière à permettre un arrosage réparti de la vitre à essuyer 69.

Le corps longitudinal d'arrosage 44 peut comporter, à l'une de ses extrémités libres, un gicleur 65 et à son autre extrémité libre un raccord 68 pour son raccordement à une canalisation (non représentée) d'alimentation en liquide de lavage sous pression.

Selon une caractéristique non représentée sur les figures, il est possible de réaliser la face externe 47 du corps longitudinal d'arrosage 46 de manière profilée pour que la rampe d'arrosage 44 constitue également un déflecteur aérodynamique.

Le montage et la fixation de l'ensemble des composants illustrés sur les figures s'effectuent de la manière suivante.

L'opérateur commence par mettre en place le corps de montage 48 de la rampe d'arrosage 44 à l'intérieur de l'étrier principal 12.

A cet effet, il emboîte, par déformation élastique, les douilles 36 dans les trous 34 et il emboîte également l'axe d'articulation 60 dans les échancrures 58 formées dans les bords 56 de la découpe 54.

A ce stade de l'assemblage, la rampe d'arrosage 44 est fixée sur l'étrier principal 12.

La suite de l'assemblage des composants s'effectue de manière classique, c'est-à-dire en mettant en place les étriers intermédiaires 16 puis les tiges formant axes d'articulation 32.

Il ne reste plus ensuite qu'à raccorder le raccord 68 à une canalisation d'alimentation en liquide de lavage.

L'invention n'est pas limitée au mode de réalisation qui vient d'être décrit.

Il est par exemple possible de réaliser simplement la rampe d'arrosage venue de matière avec deux éléments antibruit, de conception classique, en l'absence d'un corps complet de montage selon le mode de réalisation qui vient d'être décrit.

## Revendications

1. Essuie-glace pour véhicule automobile du type comportant un bras porte-balais, un balai d'essuie-glace (10) et une rampe (44) d'arrosage de la vitre à essuyer (68) qui s'étend sensiblement le long d'une face latérale du balai d'essuie-glace (10), et du type dans lequel le balai d'essuie-glace (10) comporte une structure articulée de répartition de pression comportant au moins un étrier intermédiaire (16) monté articulé sur un étrier principal (12) autour d'un axe d'articulation (32) sensiblement perpendiculaire à la direction longitudinale de l'étrier principal (12) et qui traverse deux ailes latérales (26) de l'étrier principal (12) et deux joues latérales parallèles (30) de l'étrier intermédiaire (16), et un élément antibruit comportant deux flasques parallèles latéraux (38), interposés entre les ailes latérales (26) de l'étrier principal (12) et les joues latérales (30) de l'étrier intermédiaire (16), qui sont traversés par le corps (32) de l'axe d'articulation, caractérisé en ce que la rampe d'arrosage (44, 46) s'étend le long d'une des ailes latérales (26) de l'étrier principal (12), et en ce que la rampe est réalisée venue de matière par moulage avec l'élément antibruit (38).

2. Essuie-glace selon la revendication 1, caractérisé en ce que la rampe d'arrosage comporte un corps longitudinal d'arrosage (46) traversé longitudinalement par un canal (64) de distribution du liquide de lavage comportant une série (66) d'orifices d'aspersion de la vitre à essuyer (68), et en ce que le corps longitudinal d'arrosage (46) est relié au bord inférieur longitudinal de l'un des flasques latéraux (38) de l'élément antibruit.

3. Essuie-glace selon la revendication 2, caractérisé en ce que chacune des deux extrémités longitudinales opposées de l'étrier principal (12) reçoit, de manière articulée et avec interposition d'un élément antibruit, un étrier intermédiaire (16), et en ce que le corps (46) de la rampe d'arrosage (44) est réalisé venu de matière par moulage avec les deux éléments antibruit.

4. Essuie-glace selon la revendication 3, caractérisé en ce que le corps d'arrosage (46) est réalisé venu de matière avec une plaque verticale de rigidification (50A) qui intègre deux flasques latéraux (38) appartenant aux deux éléments antibruit.

5. Essuie-glace selon la revendication 1, caractérisé en ce que la rampe d'arrosage (44) comporte un corps longitudinal de montage (48), réalisé venu de matière par moulage avec le corps longitudinal d'arrosage (46), qui présente une section transversale en forme de U renversé complémentaire de celle de l'étrier principal (12) à l'intérieur duquel il (48) est logé, et qui intègre les deux éléments antibruit.

6. Essuie-glace selon la revendication 5, caractérisé en ce que le corps de montage (48) comporte deux plaques latérales parallèles de rigidification (50A, 50B) et un dos supérieur de liaison (52).

7. Essuie-glace selon la revendication 6, caractérisé en ce que l'étrier principal (12) comporte un dos supérieur (24) qui relie les ailes latérales (26) et qui comporte une découpe (26) pour le passage d'un connecteur d'articulation de l'extrémité du bras d'essuie-glace sur une tige d'articulation (60) qui s'étend transversalement entre les ailes latérales (26), en regard de la découpe (25), en ce que le dos (52) de liaison du corps de montage (48) de la rampe d'arrosage (44) comporte une découpe (54) complémentaire de celle (25) du dos (24) de l'étrier principal (12), et en ce que les bords supérieurs (56) des plaques latérales (50A, 50B) de rigidification, dans la zone de la découpe (54), comportent des échancrures alignées (58) dans lesquelles la tige d'articulation (60) est emboîtée élastiquement pour compléter la fixation de la rampe d'arrosage (44) sur l'étrier principal (12), dans la zone centrale d'articulation de ce dernier.

8. Essuie-glace selon l'une quelconque des revendications 2 à 7, caractérisé en ce que le corps d'arrosage (44) s'étend le long du bord inférieur (27) de l'aile latérale associée de l'étrier principal (12) et en ce qu'il présente une forme qui épouse sensiblement celle de cette aile latérale (26).

9. Essuie-glace selon la revendication 8, caractérisé en ce que la face externe (47) du corps d'arrosage (46) est profilée pour constituer un déflecteur aérodynamique.

10. Essuie-glace selon l'une quelconque des revendications 2 à 9, caractérisé en ce que le corps d'arrosage (46) comporte, à l'une de ses extrémités longitudinales, un raccord (68) pour le raccordement du canal de distribution à une canalisation d'alimentation en liquide de lavage sous pression.

## Claims

1. A screen wiper for a motor vehicle, of the type comprising a blade-carrying arm, a screen wiper blade (10), and a ramp (44) for wetting the swept glass surface (68) and extending substantially along a lateral face of the screen wiper blade (10), and of the type in which the screen wiper blade (10) includes an articulated pressure-distributing structure which comprises at least one intermediate yoke (16) articulated on a main yoke (12) about a pivot pin (32), which is substantially at right angles to the longitudinal direction of the main yoke (12) and which extends through two side wing portions (26) of the main yoke (12) and two parallel side portions (30) of the intermediate yoke (16), together with a noise deadening element having two parallel side walls (38), which are interposed between the side wing portions (26) of the main yoke (12) and the side portions (30) of the intermediate yoke (16), and through which the body (32) of the pivot pin passes, characterised in that the wetting ramp (44, 46) extends along one of the side Wing portions (26) of the main yoke (12), and in that the ramp is formed integrally by moulding with the noise deadening element (38).

2. A screen wiper according to Claim 1, characterised in that the wetting ramp comprises a longitudinal wetting body portion (46), through which there extends longitudinally a channel (64) for distribution of the washing liquid, and which has a set of orifices (66) for spraying the swept glass surface (68), and in that the longitudinal wetting body portion (46) is joined to the longitudinal lower edge of one of the side walls (38) of the noise deadening element.

3. A screen wiper according to Claim 2, characterised in that each of the two opposed longitudinal ends of the main yoke (12) receives an intermediate yoke (16) by articulation, with a noise deadening element being interposed, and in that the body portion (46) of the wetting ramp (44) is formed integrally by moulding with both of the noise deadening elements.

4. A screen wiper according to Claim 3, characterised in that the wetting body portion (46) is formed with an integral, vertical stiffening wall (50A), in which two side walls (38) of the two noise deadening elements are integrated.

5. A screen wiper according to Claim 1, characterised in that the wetting ramp (44) includes a longitudinal mounting body portion (48) formed integrally by moulding with the longitudinal wetting body portion (46), and which has a profile in the form of an inverted U in transverse cross section, which is complementary to the profile of the main yoke (12) within which the said body portion (48) is lodged, the two noise deadening elements being integrated in the wetting body portion.

6. A screen wiper according to Claim 5, characterised in that the mounting body portion (48) comprises two parallel stiffening walls (50A, 50B) together with an upper connecting spine portion (52).

7. A screen wiper according to Claim 6, characterised in that the main yoke (12) has an upper spine portion (24) which joins together the side wing portions (26), and which has an opening (25) for the passage through it of a connector for articulation of the end of the screen wiper arm on a pivot pin (60) which extends transversely between the side wing portions (26), facing the opening (25), and in that the connecting spine portion (52) of the mounting body (48) of the wetting ramp (44) has an opening (54) which is complementary to the opening (25) in the spine portion (24) of the main yoke (12), and in that the upper edges (56) of the lateral stiffening walls (50A, 50B), in the region of the opening (54), have aligned notches (58) in which the pivot pin (60) is fitted elastically, so as to complete fastening of the wetting ramp (44) on the main yoke (12) in the central articulating zone of the latter.

8. A screen wiper according to any one of Claims 2 to 7, characterised in that the wetting ramp (44) extends along the lower edge (27) of the associated side wing portion of the main yoke (12), and in that it has a form which substantially matches that of the said side wing portion (26).

9. A screen wiper according to Claim 8, characterised in that the outer face (47) of the wetting body portion (46) is profiled so as to constitute an aerodynamic deflector.

10. A screen wiper according to any one of Claims 2 to 9, characterised in that the wetting body portion (46) includes, at one of its longitudinal ends, a connection (68) for connecting the distribution channel to a duct for the supply of washing liquid under pressure.

## Patentansprüche

1. Kraftfahrzeugscheibenwischer, umfassend einen Scheibenwischerarm, ein Wischblatt (10) und eine Sprühvorrichtung (44) zum Besprühen der zu wischenden Scheibe (68), die sich in etwa entlang einer Seitenfläche des Wischblatts (10) erstreckt, wobei das Wischblatt (10) eine Gelenkstruktur zur Verteilung des Anpreßdrucks umfaßt, die mindestens einen Zwischenbügel (16) enthält, der an einem Hauptbügel (12) gelenkig um eine Gelenkachse (32) angebracht ist, die in etwa senkrecht zur Längsrichtung des Hauptbügels (12) verläuft und die durch zwei Seitenschenkel (26) des Hauptbügels (12) und zwei parallele Seitenwangen (30) des Zwischenbügels (16) hindurchgeht, und ein Geräuschdämpferelement, das zwei parallele Seitenstücke (38) aufweist, die zwischen den Seitenschenkeln (26) des Hauptbügels (12) und den Seitenwangen (30) des Zwischenbügels (16) eingefügt sind und durch die der Körper (32) der Gelenkachse hindurchgeht,**dadurch gekennzeichnet**, daß sich die Sprühvorrichtung (44, 46) entlang eines der Seitenschenkel (26) des Hauptbügels erstreckt und daß die Sprühvorrichtung einstückig am Geräuschdämpferelement (38) angeformt ist.

2. Scheibenwischer nach Anspruch 1, **dadurch gekennzeichnet,** daß die Sprühvorrichtung einen Längssprühkörper (46) umfaßt, durch den in Längsrichtung ein Kanal (64) zur Verteilung der Waschflüssigkeit hindurchgeht, der eine Reihe (66) von Öffnungen für das Aufspritzen auf die zu wischende Scheibe (68) enthält, wobei der Längssprühkörper (46) mit der unteren Längskante eines der Seitenstücke (38) des Geräuschdämpferelements verbunden ist.

3. scheibenwischer nach Anspruch 2, **dadurch gekennzeichnet,** daß jedes der beiden gegenüberliegenden Längsenden des Hauptbügels (12) gelenkig und unter Einfügung eines Geräuschdämpferelements einen Zwischenbügel (16) aufnimmt und daß der Körper (46) der Sprühvorrichtung (44) einstückig an den beiden Geräuschdämpferelementen angeformt ist,

4. Scheibenwischer nach Anspruch 3, **dadurch gekennzeichnet,** daß der Sprühkörper (46) einstückig an einer vertikalen Versteifungsplatte (50A) angeformt ist, die zwei Seitenstücke (38) enthält, die zu den beiden Geräuschdämpferelementen gehören.

5. Scheibenwischer nach Anspruch 1, **dadurch gekennzeichnet,** daß die Sprühvorrichtung (44) einen einstückig am Längssprühkörper (46) angeformten Längseinbaukörper (48) umfaßt, der einen Querschnitt in Form eines umgekehrten U passend zu dem des Hauptbügels aufweist (12), in dessen Innern er gelagert ist, und der die beiden Geräuschdämpferelemente enthält.

6. Scheibenwischer nach Anspruch 5, **dadurch gekennzeichnet,** daß der Einbaukörper (48) zwei parallele seitliche Versteifungsplatten (50A, 50B) und einen oberen Verbindungsrücken (52) umfaßt.

7. Scheibenwischer nach Anspruch 6, **dadurch gekennzeichnet,** daß der Hauptbügel (12) einen oberen Rücken (24) umfaßt, der die Seitenschenkel (26) verbindet und der einen Ausschnitts (25) für den Durchgang eines Verbindungsstücks zur Anlenkung des Endes des Scheibenwischerarms an einem Gelenkstift (60) aufweist, der sich quer zwischen den Seitenschenkeln (26) gegenüber dem Ausschnitt (25) erstreckt, daß der Verbindungsrücken (52) des Einbaukörpers (48) der Sprühvorrichtung (44) einen Ausschnitt (54) passend zu dem Ausschnitt (25) des Rückens (24) des Hauptbügels (12) enthält und daß die Oberkanten (56) der seitlichen Versteifungsplatten (50A, 50B) im Bereich des Ausschnitts (54) aufeinander ausgerichtete Aussparungen (58) enthalten, in die der Gelenkstift (60) elastisch eingepaßt ist, um die Befestigung der Sprühvorrichtung (44) am Hauptbügel (12) im mittleren Gelenkbereich dieses Bügels zu vervollständigen.

8. Scheibenwischer nach einem der Ansprüche 2 bis 7, **dadurch gekennzeichnet**, daß sich der Sprühkörper (44) entlang der Unterkante (27) des mit dem Hauptbügel (12) verbundenen Seitenschenkels erstreckt und daß er eine Form aufweist, die weitgehend an die Form dieses Seitenschenkels (26) angepaßt ist.

9. Scheibenwischer nach Anspruch 8, **dadurch gekennzeichnet,** daß die Außenfläche (47) des Sprühkörpers (46) profiliert ist, um einen aerodynamischen Windabweiser zu bilden.

10. Scheibenwischer nach einem der Ansprüche 2 bis 9, **dadurch gekennzeichnet**, daß der Sprühkörper (46) an einem seiner Längsenden einen Anschluß (68) umfaßt, um den Verteilungskanal an eine Zuleitung für die unter Druck stehende Waschflüssigkeit anzuschließen.
